(19) Europäisches Patentamt / European Patent Office / Office européen des brevets

(11) **EP 2 584 475 A1**

(12) **DEMANDE DE BREVET EUROPEEN**

(43) Date de publication:
**24.04.2013 Bulletin 2013/17**

(51) Int Cl.:
**G06F 17/30** (2006.01)

(21) Numéro de dépôt: **11306340.8**

(22) Date de dépôt: **17.10.2011**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**

(71) Demandeur: **Alcatel Lucent
75007 Paris (FR)**

(72) Inventeur: **Hong, Dohy
91620 Nozay (FR)**

(74) Mandataire: **Sciaux, Edmond et al
Alcatel-Lucent International
Intellectual Property & Standards
32 Avenue Kléber
92700 Colombes (FR)**

(54) **Prise en compte de la confiance statistique pour l'évaluation de l'importance d'une page web**

(57) Procédé d'évaluation de l'importance d'une unité d'information appartenant à un ensemble d'unités d'information reliées par une collection de liens pour former un graphe orienté, consistant à mettre en oeuvre une étape de calcul d'un rang conforme au mécanisme PageRank et à appliquer au rang ainsi calculé une confiance statistique apportée par les liens vers cette unité d'information.

Fig. 1

Printed by Jouve, 75001 PARIS (FR)

**Description**

La présente invention est relative à l'évaluation des unités d'informations dans un réseau d'information.

Elle s'applique notamment à attribution de rangs à des pages web au sein du réseau *World-Wide Web,* mais elle peut également s'appliquer de façon plus générale à toute base de données constituée d'unités d'information comportant des liens vers d'autres unités d'information (bases documentaires contenant des citations...)

Le contenu de ces réseaux d'informations comme le web est classiquement organisé sous la forme de pages, ou ressources, contenant des liens vers d'autres pages (ou vers elle-même). Une ressource se définit comme possédant une adresse (ou URL, *Unified ressource Locator)* l'identifiant de façon univoque. Une ressource est souvent constitué d'un document en langage HTML *(HyperText Markup Language),* mais elle peut comprendre tout type d'informations multimédia (images, vidéos, sons...) ou assemblage d'informations multimédias de types différents.

Ces réseaux rendent disponibles aux utilisateurs internautes un volume de contenu extrêmement important. Or, ce volume continue de croître de façon très significative, notamment du fait de l'explosion de nouvelles utilisations et de nouveaux types de contenu comme le contenu multimédia, les réseaux sociaux et plus généralement le contenu créé par les utilisateurs (« *crowd-generated content»* ou « *user-generated content »),* etc.

Afin de répondre de façon pertinente aux recherches de contenu des utilisateurs, il est primordial de structurer ce volume de contenu afin de déterminer les unités d'informations les plus intéressantes.

Une approche classique pour résoudre ce problème est connue sous le nom de « PageRank ». Cette technologie est notamment employée par le moteur de recherche de la société Google notamment afin de déterminer l'ordre selon lequel les résultats d'une recherche sont présentés à l'utilisateur.

Le principe du mécanisme PageRank est de donner un rang à une page en fonction du nombre de fois qu'un utilisateur passerait sur cette page lors d'une marche aléatoire. Ce nombre ou, ce qui revient au même, la probabilité d'un utilisateur de passer sur cette page, dépend donc de l'importance des pages qui possèdent un lien vers celle-ci. Il s'agit donc d'un calcul récursif dans lequel le PageRank d'une page dépend directement du PageRank des pages possédant un pointeur vers la page en question.

On peut considérer ce principe comme une marche aléatoire sur un graphe orienté dont les noeuds représentent les pages du web et les arcs les liens entre pages (hyperliens, ou liens hypertextes). En se basant sur l'hypothèse que l'utilisateur choisisse dans son parcours chaque lien de façon indépendante des pages précédemment visitée, il s'agit d'un processus de Markov. Le rang (ou PageRank) peut alors être vu comme la probabilité stationnaire d'une chaîne de Markov.

Ce mécanisme a par exemple été décrit dans l'article « The Anatomy of a Large-Scale Hypertextual Web Search Engine » de S. Brin et L. Page, Standfort University, 1998, ou également dans le brevet américain US 6 285 999.

De nombreuses modifications ont été apportées ou proposées depuis la publication de la version originale de l'algorithme, mais aucune n'a fondamentalement changée le comportement générale du mécanisme.

Pourtant la demanderesse a remarqué des insuffisances dans certaines situations où le calcul du rang ne correspond pas à un résultat souhaitable. C'est par exemple le cas lorsqu'une page n'est liée que par une unique page : la première hérite du rang de la seconde (à un facteur d'amortissement près) alors que son importance n'est justifiée que par un unique lien.

La demanderesse est d'avis que le principe de base selon lequel l'importance d'une page ne dépend que de l'importance des pages pointant vers elle est insuffisant et que les liens entre pages doivent également être considérés pour mesurer l'importance d'une page.

Le but de l'invention est d'améliorer la situation en proposant une amélioration de l'algorithme de détermination des rangs de pages.

Pour ce faire, l'invention a pour premier objet, un procédé d'évaluation de l'importance d'une unité d'information appartenant à un ensemble d'unités d'information reliées par une collection de liens pour former un graphe orienté. Ce procédé est mis en oeuvre par un dispositif de traitement de l'information et comporte :

- une marche aléatoire dans l'ensemble d'unités d'information, comprenant le choix aléatoire à chaque étape d'un lien contenu dans l'unité d'information courante,
- à chaque unité d'information traversée, détermination d'un rang comme fonction d'au moins un nombre de fois que cette unité d'information traversée a été traversée, d'un nombre de fois que le lien emprunté a été choisi pour parvenir à l'unité d'information traversée et du nombre de liens contenus dans l'unité d'information précédente qui contient ce lien emprunté.

La marche aléatoire peut comprendre un saut vers une nouvelle unité d'information choisie aléatoirement, ce saut se faisant avec une probabilité d'amortissement.

L'invention a également pour objet un procédé d'évaluation de l'importance d'une unité d'information appartenant à un ensemble d'unités d'information reliées par une collection de liens pour former un graphe orienté. Ce procédé st mis en oeuvre par un dispositif de traitement de l'information et comporte :

- une marche aléatoire dans cet ensemble, comprenant le choix aléatoire à chaque étape un lien contenu dans l'unité d'information courante,
- à chaque unité d'information traversée , détermination d'un rang comme fonction d'au moins les rangs des unités d'informations possédant un lien vers cette unité d'information traversée, d'un nombre de fois que ces liens sont empruntés pour parvenir à l'unité d'information traversée, et d'un nombre de fois que l'unité d'information traversée a été traversée.

Cette marche aléatoire peut comprendre le saut vers une nouvelle unité d'information choisie aléatoirement, ce saut se faisant avec une probabilité d'amortissement d.

Le rang pr(i) peut être déterminé par l'équation

$$pr(i) = prc(i) \times f(i)$$

dans laquelle le terme prc(i) est donné par l'expression itérative :

$$prc(i) = \frac{1-d}{N} + d \times \sum_{j} \frac{prc(j)}{N(j)}$$

et dans laquelle j décrit les unités d'information possédant un lien vers l'unité d'information traversée, N est le nombre total de noeud et N(j) est le nombre de liens contenus dans l'unité d'information j et f(i) exprime une estimation de la confiance statistique apportée par ces liens et dépend du nombre de fois que ces liens sont empruntés pour parvenir à l'unité d'information traversée.

La confiance statistique peut s'exprimer comme une valeur résultant de l'application d'une fonction sur des valeurs déterminées sur l'ensemble des liens en fonction d'un compteur du nombre de fois que chaque lien a été choisi et du nombre de fois que l'unité d'information a été traversée.

L'invention a également pour objet un programme d'ordinateur comportant des moyens pour mettre en oeuvre ce procédé et ses options.

L'invention aussi pour objet un procédé d'évaluation de l'importance d'une unité d'information appartenant à un ensemble d'unités d'information reliées par une collection de liens pour former un graphe orienté, consistant à mettre en oeuvre une étape de calcul d'un rang conforme au mécanisme PageRank et à appliquer au rang ainsi calculé une confiance statistique apportée par les liens vers cette unité d'information.

Cette confiance statistique peut s'exprimer comme une valeur résultant de l'application d'une fonction sur des valeurs déterminées sur l'ensemble de ces liens en fonction d'un compteur du nombre de fois que chaque lien a été choisi et du nombre de fois que l'unité d'information a été traversée.

L'invention pour autre objet un serveur comportant des moyens pour mettre en oeuvre ce procédé et dans lequel les unités d'information sont des pages web disponibles sur des serveurs de contenus connectés à ce serveur.

L'invention a pour encore autre objet un procédé d'évaluation de l'importance d'une unité d'information appartenant à un ensemble d'unités d'information reliées par une collection de liens pour former un graphe orienté. Ce procédé est mis en oeuvre par un dispositif de traitement de l'information et comporte une étape de calcul d'un rang pour l'unité d'information, et une étape de calcul d'une estimation de la confiance statistique pour cette unité d'information apportée par les liens vers l'unité d'information.

Ce rang peut être un rang de type PageRank.

La confiance statistique peut s'exprimer comme une valeur résultant de l'application d'une fonction sur des valeurs déterminées sur l'ensemble des liens en fonction d'un compteur du nombre de fois que chaque lien a été choisi et du nombre de fois que l'unité d'information a été traversée.

L'invention a encore pour objet une interface homme-machine disposant de moyens pour afficher un ensemble de références d'unité d'information selon un ordre dépendant d'un rang calculé selon le procédé précédemment décrit et, en regard de chaque référence affichée, la valeur correspondante de la confiance statistique estimée.

L'invention, ses caractéristiques et ses avantages apparaîtront de façon plus claire dans la description qui va suivre en liaison avec les figures annexées.

La figure 1 est un organigramme simplifié d'un algorithme de marche aléatoire conforme à un mode de réalisation de l'invention.

Les figures 2a et 2b illustrent deux situations simplistes d'application de l'invention.

La figure 3 schématise une autre situation d'application de l'invention.

Le mécanisme PageRank se base notamment sur le principe selon lequel les unités d'informations (par exemple les pages web) sont reliées les unes aux autres par une collection de liens pour former un graphe orienté. Les unités d'information peuvent être assimilées aux noeuds de ce graphe.

L'algorithme PageRank consiste à simuler une marche aléatoire dans l'ensemble des unités d'information, c'est-à-dire la navigation aléatoire d'un utilisateur et à itérer un compteur de visite pour chaque noeud du graphe traversée (ou unité d'information).

Ce mécanisme repose sur le principe selon lequel au bout d'un grand nombre d'itérations, les noeuds les plus importants du graphe reçoivent davantage de visites et obtiennent de plus grandes valeurs du compteur de visite. Autrement dit, la mesure de l'importance d'un noeud repose sur l'architecture du graphe et non pas sur sa valeur sémantique ou intrinsèque. Ce principe se justifie par la supposition que le graphe du web s'auto-organise, les éléments d'informations (noeuds) les plus sémantiquement importants recevant davantage de liens, ils deviennent de fait structurellement important et obtiennent in fine un rang important.

Dans la suite, l'invention sera décrite pour des pages web (ou simplement « pages ») pour un souci de clarté de l'exposé, mais l'invention peut s'appliquer à d'autres types d'unités d'information. De la même façon, ces pages formant un graphe, le mot « noeud » pourra également être utilisé dans le même sens et de façon interchangeable.

Selon le mécanisme de l'invention, à page traversée, on détermine un rang comme fonction d'au moins

- un nombre de fois que la page traversée a été traversée (lors de l'ensemble des itérations),
- un nombre de fois que le lien emprunté a été choisi pour parvenir à cette page et
- un nombre de liens contenus dans la page précédente qui contient ce lien emprunté.

Selon cette mise en oeuvre, le rang est calculé de façon itérative. Chaque visite sur un noeud du graphe modifie le rang calculé, et l'on peut démontrer que ce processus est convergeant et permet d'obtenir une valeur optimale du rang à la limite.

Dans l'algorithme original de calcul du rang PageRank, on peut calculer le rang d'un noeud donné à partir des rangs des noeuds possédant un lien vers lui.

On peut exprimer ces relations par la formule suivante donnant le rang « classique » prc(i) d'une page i :

$$prc(i) = \frac{1-d}{N(i)} + d \times \sum_{j} \frac{prc(j)}{N(j)}$$

dans laquelle j décrit les pages possédant un lien vers la page i, N(j) est le nombre de liens contenus dans la page j, et d est un facteur d'amortissement (*damping factor*).

Ce facteur d'amortissement d permet à la fois de représenter le comportement moyen d'un utilisateur qui ne fait pas que cliquer sur des liens mais également peut à tout moment redémarrer sa navigation à partir d'une nouvelle page, et d'éviter les « trous noirs ». Ces trous noirs sont des sous-ensembles de pages organisés de sorte que les liens pointent vers d'autres pages du sous-ensemble, sans jamais en sortir. Ce facteur d'amortissement évite que l'algorithme boucle dans ces sous-ensembles et ne fournisse des rangs trop importants et non représentatifs de l'intérêt réel de ces pages.

Selon l'invention, on applique à ce rang une expression f(i) représentative de la confiance statistique apportée par les liens vers la page i afin d'obtenir une évaluation de l'importance de la page i.

Cette importance est alors donnée par l'expression :

$$pr(i) = prc(i) \times f(i)$$

Dans la suite, on utilisera également le terme « rang » pour désigner cette importance. Il est toutefois à noter que ce terme « rang » peut alors désigner l'importance telle qu'évaluée par l'invention, et le rang tel que classiquement déterminé par l'algorithme de PageRank notamment.

L'expression f(i) est une valeur résultant de l'application d'une fonction f sur les valeurs r(i,j) déterminées sur l'ensemble des liens (i-j) entre la page i et les pages j possédant un lien vers la page i.

Cette valeur est une estimation de la confiance statistique apportée par cette collection de liens (i,j).

Dans un premier cas extrême, si la majorité des traversées du noeud i provient d'un unique lien (i,j), la confiance peut être considérée comme faible : indépendamment du rang de la page j associée à ce lien, la communauté du web n'a pas établi de liens significatifs vers cette page i. Selon l'invention, son rang doit être pénalisé.

Dans un second cas extrême, si la contribution des noeuds j est équiprobable, c'est qu'aucun lien en particulier ne favorise le rang de ce noeud qui est, en quelque sorte, plébiscité. Selon l'invention, son rang est moins pénalisé.

Il est possible de considérer différentes fonction f exprimant ce comportement.

Selon un mode de réalisation de l'invention, cette fonction f peut s'écrire :

$$f(i) = 1 - \alpha \times \sum_j r(i,j)^{\beta}$$

dans laquelle $\alpha$ est un paramètre compris entre 0 et 1, et $\beta$ est un paramètre supérieur à 1. Typiquement, on peut choisir $\beta = 2$ et $\alpha = 0,5$.

Par ailleurs, on peut également définir la relation suivante donnant la valeur r(i,j) :

$$r(i,j) = p(i,j) \times \frac{pr(j)}{pr(i)}$$

dans laquelle p(i,j) est la probabilité que la marche aléatoire choisisse le lien (i,j). Par définition, donc, $\sum_j r(i,j) = 1$

Dans une mise en oeuvre de l'invention basée sur une simulation de la marche aléatoire, cette valeur r(i,j) peut se calculer à partir de compteurs du nombre du nombre C(i,j) de fois que le lien (i,j) a été choisi pour parvenir à cette page i et du nombre C(i) de fois que la page i a été visitée. Ce nombre C(i) est une approximation du rang pr(i) après normalisation.

Par conséquent, on peut écrire la relation suivante :

$$r(i,j) = \frac{C(i,j)}{C(i)}$$

Cette valeur r(i,j) est donc représentative de la contribution du lien (i,j) à l'importance de la page i.

L'invention consiste donc à appliquer cette estimation de la confiance statistique sur le mécanisme de calcul du « PageRank ». Son application permet de pallier les insuffisances du mécanisme initial de PageRank sans complexifier l'algorithme, ni impacter ses propriétés, notamment sa convergence.

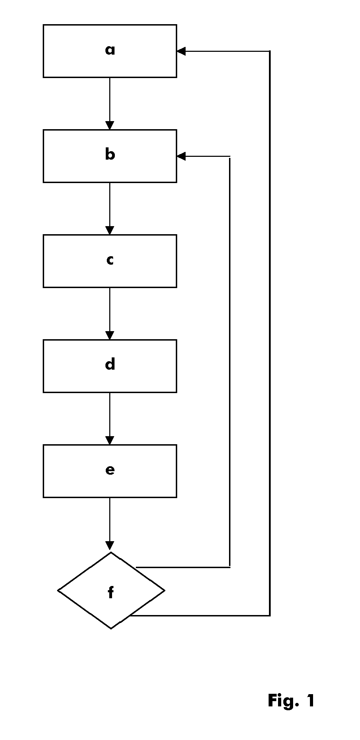

La figure 1 représente l'organigramme d'une mise en oeuvre du mécanisme conforme à l'invention.

Le procédé peut se décomposer en plusieurs étapes :

(a) sélection d'une première page,
(b) sélection d'un lien sortant vers une page suivante i,
(c) incrémentation d'un compteur de lien C(i,j) pour ce lien,
(d) incrémentation d'un compteur de visite C(i) pour cette page suivante,
(e) détermination d'un rang, ou importance, pour cette page suivante
(f) reboucler vers l'étape (a) avec une probabilité d'amortissement, ou reboucler vers l'étape (b) avec une probabilité complémentaire de la probabilité d'amortissement.

L'étape (a) consiste à choisir, généralement de façon aléatoire, un premier noeud dans le graphe.

L'invention peut s'appliquer toutefois à d'autres mises en oeuvre du calcul d'un rang. La marche aléatoire n'est en effet qu'une mise en oeuvre possible, et il est également possible de calculer un PageRank par calculs matriciels. L'invention s'applique également à un tel mode de réalisation dans la mesure où elle consiste à calculer un paramètre indépendant du rang et à le combiner ou à l'associer avec lui.

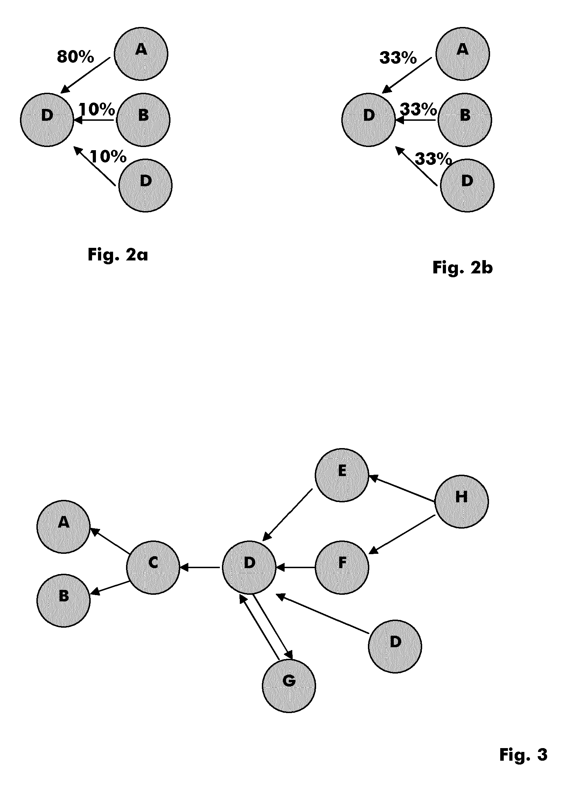

Les figures 2a et 2b illustrent deux situations typiques avec 4 pages, A, B, C, D, les trois premières possédant un lien vers la quatrième.

Sur ces liens figurent un pourcentage correspondant à la valeur r(i,j), c'est à dire 100xC(i,j) / C(i).

Dans la situation de la figure 2a, le calcul de f(D) donne

$$f(D) = 1 - \alpha[0,8 \wedge \beta + 0,1 \wedge \beta + 0,1 \wedge \beta]$$

soit, avec $\beta$=2 et $\alpha$ = 0,5, f(D) = 0,67

Dans la situation de la figure 2b, le même calcul donne

$$f(D) = 1 - 3\alpha[0,33 \wedge \beta]$$

soit, avec $\beta$=2 et $\alpha$ = 0,5, f(r(D,j)) = 0,83

On obtient bien une estimation de la confiance statistique supérieure dans le deuxième cas où les contributions des trois pages A, B, C sont identiques.

Cette confiance statistique peut alors impacter directement le rang de la page D. On peut utiliser l'expression donnée ci-dessus en prenant un facteur d'amortissement égal à 0,8. On suppose que les pages A, B, C possèdent chacune un unique lien sortant, c'est-à-dire celui vers la page D.

Dans la situation de la figure 2a, on obtient

$$pr(D) = [0,2 + 0,8x(pr(A)+pr(B)+pr(C))/1]x0,67$$

Dans la situation de la figure 2b, on obtient

$$pr(D) = [0,2 + 0,8x3x(pr(A)+pr(B)+pr(C))/1]x0,83$$

Autrement dit, la prise en compte de la confiance statistique permet de discriminer deux situations bien différentes, alors même que l'algorithme du PageRank conforme à l'état de la technique donne une valeur identique dans les deux cas, voire dans certaines situations, inversée.

La figure 3 est un autre exemple d'application du procédé selon l'invention.

On suppose $\beta$=2, $\alpha$ = 0,5 et d=0,8 comme dans les exemples précédents. On suppose également que les contributions des noeuds E, F, J, G sont identiques pour la page D.

Le rang de la page D est déterminé par l'équation

$$pr(D) = [0,2 + 0,8x4x(pr(E)+pr(F)+pr(G)+pr(J))/1] \times [1 - 4x0,5x(0,25 \wedge 2)]$$

Le rang de la page C est déterminé par l'équation

$$pr(C) = [0,2 + 0,8 \times pr(D)/1] \times [1 - 0,5x1]$$

Le rang des pages A et B est déterminé par l'équation :

$$pr(A) = pr(B) = [0,2 + 0,8 \times pr(C)/2] \times [1 - 0,5 \times 1]$$

Dans cette situation aussi, le procédé selon l'invention permet de discriminer clairement l'importance des pages C et D. L'importance de la page D est élevée du fait des nombreux liens vers cette page, tandis que l'importance de la page C est beaucoup plus bas puisque seule une unique page pointe vers cette page.

Il est à noter que le facteur d'amortissement était insuffisant à clairement distinguer ces deux pages. Augmenter ce facteur d'amortissement ne peut représenter une solution valable car cela impacterait l'efficace de l'algorithme et la pertinence du rang estimée (à la limite, le rang exprimerait alors simplement le nombre de liens entrants).

Le rang ainsi calculé par le procédé de l'invention peut être utilisé de diverses façons.

Il peut notamment permettre d'ordonnancer les résultats d'une recherche via un moteur de recherche, en présentant en premier ou avec une mise en exergue, les pages présentant un rang élevé. Plus précisément et de façon connue en soi, une telle utilisation peut comporter une première étape de recherche d'un ensemble de pages correspondant à des critères de recherche (mots-clés, notamment), puis en une seconde étape d'ordonnancement et une troisième étape d'affichage des résultats selon cet ordonnancement. L'ordonnancement peut être effectué selon une combinaison entre le rang calculé par le procédé de l'invention et un degré d'affinité entre les critères de recherche et le contenu de la page.

Le procédé précédemment décrit peut donc être mis en oeuvre par un serveur connecté par un réseau de communication à une pluralité de serveurs de contenus mettant à disposition des pages web. Il peut ainsi permettre d'évaluer l'importance de ces pages web.

Compte tenu du caractère dynamique du contenu du web, cette évaluation peut être effectuée périodiquement par ce serveur.

Selon un mode de réalisation de l'invention, la confiance statistique peut ne pas être appliquée au rang prc(i) mais associé pour fournir à l'utilisateur un résultat combinant les deux.

Par exemple, dans une application où l'utilisateur effectue une recherche via un moteur de recherche, les résultats peuvent lui être présentés sous la forme d'une liste de référence de pages web (ou unités d'information, dans le cas plus général) trié selon le rang. L'estimation de la confiance statistique peut être affichée en regard.

Cette information peut être utile à l'utilisateur car elle lui fournit une indication si la page correspondante est plébiscitée par un grand nombre de liens ou au contraire n'a un bon rang que par la contribution d'un petit nombre de liens, eux-mêmes de rang élevé.

## Revendications

1. Procédé d'évaluation de l'importance d'une unité d'information appartenant à un ensemble d'unités d'information reliées par une collection de liens pour former un graphe orienté, ledit procédé étant mis en oeuvre par un dispositif de traitement de l'information et comportant

   - une marche aléatoire dans ledit ensemble, comprenant le choix aléatoire à chaque étape d'un lien contenu dans l'unité d'information courante,
   - à chaque unité d'information traversée, détermination d'un rang comme fonction d'au moins un nombre de fois que ladite unité d'information traversée a été traversée (C(i)), d'un nombre de fois que le lien emprunté a été choisi pour parvenir à ladite unité d'information traversée et du nombre de liens contenus dans l'unité d'information précédente qui contient ledit lien emprunté.

2. Procédé selon la revendication précédente, dans lequel ladite marche aléatoire comprend le saut vers une nouvelle unité d'information choisie aléatoirement, ledit saut se faisant avec une probabilité d'amortissement.

3. Procédé d'évaluation de l'importance d'une unité d'information appartenant à un ensemble d'unités d'information reliées par une collection de liens pour former un graphe orienté, ledit procédé étant mis en oeuvre par un dispositif de traitement de l'information et comportant

   - une marche aléatoire dans ledit ensemble, comprenant le choix aléatoire à chaque étape un lien contenu dans l'unité d'information courante,
   - à chaque unité d'information traversée (i), détermination d'un rang (pr(j)) comme fonction d'au moins les rangs (pr(j)) des unités d'informations (j) possédant un lien vers ladite unité d'information traversée, d'un nombre (C(i,j)) de fois que lesdits liens sont empruntés pour parvenir à ladite unité d'information traversée, et d'un nombre de fois que ladite unité d'information traversée a été traversée (C(i)).

4.  Procédé selon la revendication précédente, dans lequel ladite marche aléatoire comprend le saut vers une nouvelle unité d'information choisie aléatoirement, ledit saut se faisant avec une probabilité d'amortissement d.

5.  Procédé selon la revendication précédente dans lequel ledit rang pr(i) est déterminé par l'équation

$$ pr(i) = prc(i) \times f(i) $$

dans laquelle le terme prc(i) est donné par l'expression itérative :

$$ prc(i) = \frac{1-d}{N(i)} + d \times \sum_{j} \frac{prc(j)}{N(j)} $$

Et dans laquelle j décrit les unités d'information possédant un lien vers ladite unité d'information traversée, N(j) est le nombre de liens contenus dans l'unité d'information j et f(i)) exprime une estimation de la confiance statistique apportée par lesdits liens et dépend dudit nombre (C(i,j)) de fois que lesdits liens sont empruntés pour parvenir à ladite unité d'information traversée.

6.  Procédé selon la revendication précédente dans lequel ladite confiance statistique peut s'exprimer comme une valeur résultant de l'application d'une fonction f sur des valeurs r(i,j) déterminées sur l'ensemble desdits liens en fonction d'un compteur du nombre de fois que chaque lien a été choisi et du nombre de fois que ladite unité d'information a été traversée.

7.  Programme d'ordinateur comportant des moyens pour mettre en oeuvre le procédé selon l'une des revendications 3 à 6.

8.  Procédé d'évaluation de l'importance d'une unité d'information appartenant à un ensemble d'unités d'information reliées par une collection de liens pour former un graphe orienté, consistant à mettre en oeuvre une étape de calcul d'un rang conforme au mécanisme PageRank et à appliquer au rang ainsi calculé une confiance statistique f(i) apportée par les liens vers ladite unité d'information.

9.  Procédé selon la revendication précédente dans lequel ladite confiance statistique peut s'exprimer comme une valeur résultant de l'application d'une fonction f sur des valeurs r(i,j) déterminées sur l'ensemble desdits liens en fonction d'un compteur du nombre de fois que chaque lien a été choisi et du nombre de fois que ladite unité d'information a été traversée.

10. Serveur comportant des moyens pour mettre en oeuvre le procédé selon l'une des revendications 8 ou 9, dans lequel lesdites unités d'information sont des pages web disponibles sur des serveurs de contenus connectés audit serveur.

11. Procédé d'évaluation de l'importance d'une unité d'information appartenant à un ensemble d'unités d'information reliées par une collection de liens pour former un graphe orienté, ledit procédé étant mis en oeuvre par un dispositif de traitement de l'information et comportant une étape de calcul d'un rang pour ladite unité d'information, et une étape de calcul d'une estimation de la confiance statistique pour ladite unité d'information apportée par les liens vers ladite unité d'information.

12. Procédé selon la revendication précédente dans lequel ledit rang est un rang de type PageRank.

13. Procédé selon l'une des revendication 11 ou 12, dans lequel ladite confiance statistique peut s'exprimer comme une valeur résultant de l'application d'une fonction f sur des valeurs r(i,j) déterminées sur l'ensemble desdits liens en fonction d'un compteur du nombre de fois que chaque lien a été choisi et du nombre de fois que ladite unité d'information a été traversée.

**14.** Interface homme-machine disposant de moyens pour afficher un ensemble de références d'unité d'information selon un ordre dépendant d'un rang calculé selon le procédé de l'une des revendications 11 à 13 et, en regard de chaque référence affichée, la valeur correspondante de la confiance statistique estimée.

**Fig. 1**

**Fig. 2a**

**Fig. 2b**

**Fig. 3**

| | | Europäisches Patentamt<br>European Patent Office<br>Office européen des brevets | **RAPPORT DE RECHERCHE EUROPEENNE** | Numéro de la demande<br>EP 11 30 6340 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 7 451 388 B1 (HENZINGER MONIKA R [US] ET AL) 11 novembre 2008 (2008-11-11)<br>* colonne 2, ligne 32 - colonne 3, ligne 18 *<br>* colonne 3, ligne 65 - colonne 4, ligne 67 *<br>* colonne 5, ligne 37 - colonne 6, ligne 5 *<br>* colonne 6, ligne 57 - colonne 7, ligne 33 *<br>* colonne 9, ligne 3-47; revendications *<br>----- | 1-14 | INV.<br>G06F17/30 |
| X | US 6 285 999 B1 (PAGE LAWRENCE [US])<br>4 septembre 2001 (2001-09-04)<br>* colonne 2, ligne 51 - colonne 3, ligne 29 *<br>* colonne 3, ligne 56 - colonne 4, ligne 48 *<br>* colonne 6, ligne 13 - colonne 7, ligne 55; revendications 1-13, 20-29 *<br>----- | 1-14 | |
| X | BRIN S ET AL: "The anatomy of a large-scale hypertextual Web search engine",<br>COMPUTER NETWORKS AND ISDN SYSTEMS, NORTH HOLLAND PUBLISHING. AMSTERDAM, NL,<br>vol. 30, no. 1-7,<br>1 avril 1998 (1998-04-01), pages 107-117, XP004121435,<br>ISSN: 0169-7552, DOI:<br>10.1016/S0169-7552(98)00110-X<br>* sections 2.1.1 et 2.1.2 *<br>----- | 1-14 | DOMAINES TECHNIQUES RECHERCHES (IPC)<br><br>G06F |
| X | US 2009/083222 A1 (CRASWELL NICHOLAS [GB] ET AL) 26 mars 2009 (2009-03-26)<br>* alinéas [0021], [0037] - [0046], [0051], [0052], [0057] - [0059] *<br>----- | 1-14 | |

Le présent rapport a été établi pour toutes les revendications

| Lieu de la recherche | Date d'achèvement de la recherche | Examinateur |
|---|---|---|
| Munich | 19 mars 2012 | Herry, Tzvetanka |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 30 6340

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-03-2012

| Document brevet cité au rapport de recherche | | Date de publication | Membre(s) de la famille de brevet(s) | | Date de publication |
|---|---|---|---|---|---|
| US 7451388 | B1 | 11-11-2008 | AUCUN | | |
| US 6285999 | B1 | 04-09-2001 | US | 6285999 B1 | 04-09-2001 |
| | | | US | 6799176 B1 | 28-09-2004 |
| | | | US | 7058628 B1 | 06-06-2006 |
| | | | US | 7908277 B1 | 15-03-2011 |
| | | | US | 8126884 B1 | 28-02-2012 |
| | | | US | 8131715 B1 | 06-03-2012 |
| | | | US | 8131717 B1 | 06-03-2012 |
| US 2009083222 | A1 | 26-03-2009 | AUCUN | | |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6285999 B

**Littérature non-brevet citée dans la description**

- **S. BRIN ; L. PAGE.** *The Anatomy of a Large-Scale Hypertextual Web Search Engine,* 1998